# EUROPÄISCHE PATENTANMELDUNG

(11) **EP 1 661 681 A1**
(43) Veröffentlichungstag der Anmeldung: **31.05.2006**
(21) Anmeldenummer: 05025702.1
(22) Anmeldetag: 25.11.2005
(51) Int. Cl.: B29C 33/38, B29C 33/02, B29C 45/73, B29C 45/40, B29C 33/76

(54) **Werkzeugstift, wie formgebender Werkzeugstift, Kernstift, Auswerferstift od. dgl., bei einer Werkzeugform zur Verarbeitung plastischer Massen, inbesondere Kunstoffspritzgiessform**

(30) Priorität: 30.11.2004 DE 102004057945; 21.11.2005 DE 102005055807
(71) Anmelder: HASCO Hasenclever GmbH & Co KG, 58513 Lüdenscheid (DE)
(72) Erfinder: Peukert, Dieter, Dipl.-Ing., 58553 Halver (DE)
(74) Vertreter: Ostriga, Sonnet, Wirths & Roche

(57) **Zusammenfassung**

Die Erfindung betrifft einen Werkzeugstift, wie formgebenden Werkzeugstift, Kernstift, Auswerferstift od. dgl., einer Werkzeugform zur Verarbeitung plastischer Massen, insbesondere Kunststoffspritzgießform, mit mindestens einem eine Formhöhlung begrenzenden formbildenden Werkzeugteil, wie Formplatte oder Formeinsatz, welches mindestens eine Führungsaussparung zur Aufnahme eines relativ zur Führungsaussparung beweglichen stabförmigen Werkzeugstifts (21), wie Auswerferstift oder Kemstift, enthält. Aufgabe der Erfindung ist es, ein Formwerkzeug zu schaffen, bei dem die Wärmeableitung verbessert ist, ohne dass sich dies negativ auf die Standzeit auswirkt.

Der Werkzeugstift weist einen Mantelbereich (44) aus Stahl auf, der zumindest über einen axialen Teilbereich mit einer Axialbohrung (28) versehen ist, in welcher ein Stiftkern (31) aus hochwärmeleitfähigem Material angeordnet ist, wobei die Werkstoffe von Mantelbereich (44) und Stiftkern (31) unter Bildung einer dauerfesten und lückenlosen Verbindung zwischen der Außenmantelfläche (34) des Stiftkems (31) und der Innenmantelfläche (37) des Stiftmantels (44) ineinander greifen.

## Beschreibung

Die Erfindung betrifft einen Werkzeugstift, wie formgebenden Werkzeugstift, Kernstift, Auswerferstift od. dgl., bei einer Werkzeugform zur Verarbeitung plastischer Massen, insbesondere Kunststoffspritzgießform, gemäß dem Oberbegriff des Anspruches 1.

Bei Werkzeugformen der eingangs bezeichneten Gattung besteht das Problem, die von der flüssigen Schmelze in das Werkzeug abgegebene Wärme aus der Werkzeugform abzuleiten und eine gleichmäßige Abkühlung des Formteils zu erreichen. Die in der Werkzeugform vorgesehenen Kühlkanäle sind bei besonderen Einsatzfällen nicht immer hinreichend. So ist beispielsweise eine gleichmäßige Abkühlung des Formteils schwierig. Insbesondere mit Materialanhäufungen, wie Sackloch-Ansätzen oder Anschraubdomen, gehen häufig zu Artikelausschuss führende Spannungen und Risse einher.

Aus einem druckschriftlich nicht belegbaren Stand der Technik ist es bekannt, Werkzeugformen zu fertigen, die mit Auswerferstiften aus einem hochwärmeleitfähigen Werkstoff, beispielsweise aus CuBe, versehen sind, um auf diese Weise Wärme besser aus dem Formhohlraum nach außen ableiten zu können. Ein solcher Kupferberyllium-Auswerferstift ist durch die Firma Drei-S-Werk offenkundig vorbenutzt. Der CuBe-Auswerferstift ist jedoch nur schlecht spangebend zu bearbeiten. Zudem ist er anfällig gegen korrosive Schmelzen, welche z.B. bei feuerhemmenden Kunststoffen verwendet werden. Darüber hinaus ist der CuBe-Auswerferstift mit dem Nachteil behaftet, dass er wegen einer ungenügenden Abriebfestigkeit nur relativ geringe Standzeiten gestattet.

Um diese Nachteile zu vermeiden wurden von der Patentsucherin umfangreiche Versuche vorgenommen. Dabei wurde ein mit einer Axialbohrung versehener Auswerferstift aus Stahl mit einem eingeschrumpften Kupferkern versehen. Die Versuche haben gezeigt, dass eine feste in Radialrichtung wirkende Verbindung zwischen dem Kupferkern und dem Stahlmantel über die gesamte axiale Länge zumindest partiell nicht möglich ist, so dass kein einheitlicher Verbund vorhanden ist. Da Werkzeugstifte regelmäßig als Normalien in den Handel gelangen, also zunächst zu Fixlängen gekürzt und außerdem später durch den Formenbauer in Anpassung an den jeweiligen Anwendungsfall abermals gekürzt werden müssen, sind in den Kürzungsebenen Unregelmäßigkeiten erkennbar. Diese Unregelmäßigkeiten bewirken nicht nur eine Verringerung der Wärmeableitung und einen ungenügenden Zusammenhalt zwischen Kern und Mantel, sondern sie zeigen an den Grenzflächen zwischen dem eingeschrumpften Kupferkern und dem Stahlmantel partielle Unregelmäßigkeiten, insbesondere Vertiefungen, die sich beim fertigen Kunststoffspritzgussartikel in unzulässiger Weise abbilden.

Von der DE 196 32 507 A1 ist es bekannt, einen Auswerferstift in einer Axialbohrung einer Hülse zu führen. Jene Anordnung dient nur der leichten Auswechselbarkeit der Verschleißteile und nicht Wärmeableitung aus der Form.

Von der WO 94126496 ist es bekannt, einen Auswerferstift in einer Axialbohrung einer Auswerferhülse zu führen. Ziel jener Anordnung ist es, den Verschleiß des Auswerferstiftes zu reduzieren, was mittels einer konisch zulaufenden Bohrung der Auswerferhülse gelöst wird. Eine bessere Wärmeableitung wird mit der bekannten Anordnung nicht erreicht.

Aus der DE 44 39 984 C1 ist es bekannt, Dauerformen für Metall-, Kunststoff- und Glasguss im Bereich der inneren formgebenden Oberfläche zumindest teilweise aus einem Werkstoffverbund zu fertigen. Dabei weist die Oberflächenschicht ein Material geringerer Wärmeleitfähigkeit, jedoch hoher Thermoschock und Abriebbeständigkeit auf. Solche Werkstoffverbunde aus Werkstoffen mit stark unterschiedlichen thermischen Ausdehnungskoeffizienten waren jedoch nur schwierig herzustellen. Sie wiesen Nachteile in der Maßhaltigkeit und der Standzeit auf.

Schließlich ist es aus der DE 694 03 513 T2 von einer Kunststoffspritzgießdüse bekannt, deren Torpedo aus einer äußeren Stahlhülle zu fertigen und letztere mit einer Cu-Füllung zu versehen, ohne dass dabei ein Verbund zwischen Stahl und Cu erwähnt ist.

Ausgehend von der eingangs erwähnten offenkundigen Vorbenutzung, ist es Aufgabe der Erfindung, einen Werkzeugstift zu schaffen, bei dem die Wärmeableitung, die Standzeiten und dessen Festigkeitseigenschaften verbessert sind.

Die Erfindung löst diese Aufgabe mit den Merkmalen des Anspruches 1, insbesondere mit den kennzeichnenden Merkmalen, wonach der Werkzeugstift einen Mantelbereich aus Stahl aufweist, der zumindest über einen axialen Teilbereich mit einer Axialbohrung versehen ist, in welcher ein Stiftkern aus hochwärmeleitfähigem Werkstoff angeordnet ist, wobei die Werkstoffe von Mantelbereich und Stiftkern unter Bildung einer dauerfesten und lückenlosen Verbindung zwischen der Außenmantelfläche des Stiftkerns und der Innenmantelfläche des Stiftmantels ineinander greifen.

Das Prinzip der Erfindung besteht somit im Wesentlichen darin, dass der Werkzeugstift, wie beispielsweise ein Auswerferstift oder ein Kernstift, über die gesamte axiale Länge oder einen Teil davon einen Kern aus hochwärmeleitfähigem Material aufweist, um den ein Mantel aus einem abriebfestem, gut zerspanbaren und thermoschockunempfindlichem Material, wie beispielsweise Stahl angeordnet ist. Dabei greifen der Werkstoff des Kerns und der Werkstoff des Mantels ineinander, d.h., die Werkstoffe können über Adhäsionskräfte, ein mechanisches Ineinandergreifen oder auch mittels einer metallischen Bindung dauerfest und lückenlos miteinander verbunden sein.

Die Erfindung hat den Vorteil, dass die Wärme aufgrund des Kerns aus hochwärmeleitfähigem Material wesentlich besser insbesondere von Materialanhäufungen, wie Sacklöchern oder Anschraubdomen und weiteren Problemzonen des Formteils abgeleitet wird. Der Mantelbereich aus einem abriebfesten und thermoschockunempfindlichen Material, wie beispielsweise Stahl, gewährleistet eine hohe Standzeit des Werkzeugstiftes. Darüber hinaus ist die Fertigung gegenüber dem Stand der Technik vereinfacht, weil Stahl gut zerspanbar ist. Mit Hilfe des erfindungsgemäßen Werkzeugstiftes werden die Zykluszeiten eines Formvorganges deutlich reduziert.

Dadurch, dass der Werkstoff des Stiftkerns und der Werkstoff des Stiftmantels über die gesamte axiale Länge eines Werkzeugstifts innig und lückenlos miteinander verbunden sind, ist eine solche räumliche Verbundanordnung allein schon wegen ihrer sehr guten Festigkeitseigenschaften hervorragend als Normalie für formgebende Werkzeugstifte, also für Kernstifte, und auch für Auswerferstifte geeignet. Die sowohl bei der Anfertigung als auch bei der Verwendung von Normalien entstehenden radialen Kürzungsflächen zeigen - auch im Anschliff - einen lückenlosen Übergang zwischen dem Kernwerkstoff und dem Mantelwerkstoff. Mithin sind in diesem Bereich - im Unterschied etwa zu der vorbeschriebenen versuchsweisen Schrumpfanordnung - bei einer efindungsgemäßen Normalie keinerlei Vertiefungen vorhanden, welche sich ansonsten beim fertigen Kunststoffartikel in lästiger Weise abbilden könnten.

Die Erfindung wendet zur Herstellung des Werkzeugstiftes ein Verfahren der MECOBOND Dr. Betz GmbH, 45478 Mülheirn (DE), an. Mit Hilfe dieses Verfahrens können die oben geschilderten Probleme beim Herstellen eines Werkstoffverbundes bei Metallen mit unterschiedlichen Wärmeausdehnungskoeffizienten vermieden werden. Bei diesem Verfahren wird beim Abkühlen der beiden Werkstoffe ein Druck angelegt, der die Streckgrenze wenigstens eines der beiden Werkstoffe übersteigt, so dass dieser - zumindest im Mikrobereich - plastisch verformt wird. Der Druck kann dabei auch gezielt nur auf einen der beiden Werkstoffe - beispielsweise nur auf den aus Kupfer oder aus einer Kupferlegierung bestehenden Stiftkern - aufgebracht werden.

Das MECOBOND-Verfahren ist in der DE 102 29 994 C1 beschrieben, wobei jene Druckschrift ansonsten keine Anregung zu einer Anwendung des Verfahrens zur Herstellung des vorteilhaften erfindungsgemäßen speziellen Werkzeugstifts vermittelt. Im einzelnen betrifft das MECOBOND-Verfahren einen räumlichen Werkstoffverbund mit wenigsten zwei Werkstoffen mit unterschiedlichen thermischen Ausdehnungskoeffizienten, wobei der Werkstoffverbund zu seiner Herstellung und/oder bei der Wärmebehandlung erwärmt und anschließend abgekühlt wird. Während der Abkühlung durchläuft der Werkstoffverbund ein Temperaturintervall, in dem die beiden Werkstoffe im festen Aggregatzustand vorliegen und wobei während des Durchlaufens des Temperaturintervalls auf den Werkstoffverbund ein isostatischer Druck oberhalb der Warmstreckgrenze zumindest eines der Werkstoffe ausgeübt wird, so dass dieser Werkstoff zumindest im Mikrobereich plastisch verformt wird.

Einer weiteren Ausführungsform der Erfindung gemäß ist der Stiftkern aus Kupfer oder aus einer Kupferlegierung gebildet. Kupfer hat den Vorteil einer hohen thermischen Leitfähigkeit, so dass die Wärme optimal und sehr gezielt aus thermisch problematischen Zonen der Form abgeleitet werden kann. Auf diese Weise kann ein gleichmäßigeres Abkühlen des Formteiles erreicht werden. Der Stiftkern kann anstatt aus reinem Kupfer alternativ aus einer Kupferlegienrng oder einem anderen Werkstoff hoher Wärmeleitfähigkeit gebildet sein.

Für eine solche Anordnung sieht das MECOBOND-Verfahren insbesondere vor, dass der Werkstoffverbund zwischen dem Kupfer oder der Kupferlegierung und dem Werkzeugstahl durch einen Hochtemperatur-Hochdruck-Metalldiffusionsvorgang, bei dem eine Temperatur zwischen 850°C und 1.200°C und ein Druck zwischen 100 x 10⁵ Pa und 5000 x 10⁵ Pa eingestellt wird, unter Bildung einer dauerfesten metallischen Verbindung hergestellt wird.

Gemäß einer weiteren Ausgestaltung der Erfindung ist die Axialbohrung an wenigstens dem formhöhlungsseitigen Endbereich mittels einer Stahlplatte verschlossen. Da der Werkzeugstift eine Normalie ist, die auf die gewünschte Länge gekürzt wird, kann der Stiftkern im Bereich der formhöhlungsseitigen Öffnung der Axialbohrung mit korrosiven Formwerkstoffen in Berührung kommen. Um dies zu verhindern, kann die Öffnung der Axialbohrung mittels einer Stahlplatte verschlossen werden. Die Stahlplatte kann beispielsweise mittels einer Schweißverbindung an dem Stahlmantel des Werkzeugstiftes befestigt sein.

Einer weiteren Ausgestaltung der Erfindung gemäß ist die Axialbohrung an wenigstens dem formhöhlungsseitigen Endbereich mittels einer Beschichtung verschlossen. Eine solche Beschichtung kann durch Auftragsschweißen, beispielsweise durch Laser-Auftragsschweißen hergestellt sein. Auf diese Weise ist die Axialbohrung wenigstens formhöhlungsseitig dicht verschlossen, so dass keine Schmelze mit dem Materialkern in Berührung kommen kann.

Einer weiteren Ausgestaltung der Erfindung gemäß sind benachbart dem Werkzeug stift Kühlkanäle angeordnet. Mittels der Kühlkanäle können die dem Werkzeugstift benachbarten Bereiche wassergekühlt werden, so dass die von dem Werkzeugstift aus der Form und von der Schmelze aufgenommene Wärme sehr direkt an die Kühlkanäle abgegeben und aus der Form geleitet werden kann.

Gemäß einer weiteren Ausführungsform erstreckt sich die Axialbohrung über den gesamten Axialbereich des Werkzeugstiftes. Auf diese Weise ist es möglich, über die gesamte axiale Länge des Werkzeugstiftes einen Stiftkern aus hoch wärmeleitfähigem Material vorzusehen.

Gemäß einer weiteren Ausgestaltung der Erfindung erstreckt sich der Stiftkern über den gesamten Axialbereich des Werkzeugstiftes. Der Werkzeugstift ist dann über seine gesamte Länge mit einer Axialbohrung versehen, welche vollständig von dem Stiftkern ausgefüllt ist. Es besteht somit die Möglichkeit, über den gesamten Längenbereich des Werkzeugstiftes Wärme aus der Form aufzunehmen und zu anderen Bereichen abzuleiten, an denen die Wärmeenergie beispielsweise an Kühlwasser oder die Außenluft abgegeben werden kann.

Einer weiteren Ausgestaltung der Erfindung entsprechend erstreckt sich der Stiftkern über einen axialen Teilbereiches des Werkzeugstiftes. Unabhängig davon, ob der Werkzeugstift über seinen gesamten Axialbereich oder nur in einem Teilbereich mit einer Bohrung versehen ist, kann der Stiftkern nur in einem Teilbereich des Werkzeugstiftes vorgesehen sein. Das kann z.B. der Fall sein, wenn nur in einem Teilbereich des Werkzeugstiftes Wärme abgeleitet werden soll. Zudem kann der Werkzeugstift, beispielsweise aus Festigkeitsgründen, nur in einem Teilbereich eine Axialbohrung aufweisen und mit dem Stiftkern versehen sein.

Einer weiteren Ausgestaltung der Erfindung gemäß weist der Werkzeugstift einen Mindestdurchmesser von 10 mm auf. Da Kupfer weniger gute Festigkeitseigenschaften als Stahl hat, wird mit diesem Mindestdurchmesser eine ausreichende Festigkeit des Werkzeugstiftes gewährleistet.

Weitere Vorteile der Erfindung ergeben sich anhand der nachfolgenden Beschreibung eines in den Zeichnungen dargestellten Ausführungsbeispieles.
Es zeigen:
Fig. 1 einen schematisch dargestellten Längsschnitt durch eine Kunststoffspritzgießform mit erfindungsgemäßen Werkzeugstiften,
Fig. 2 eine Einzelteildarstellung eines Werkzeugstiftes gemäß Fig. 1 und

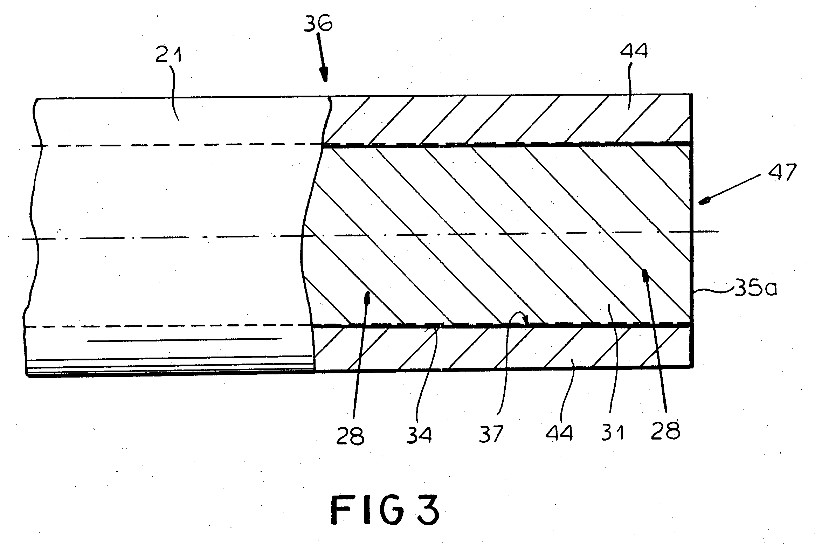

Fig. 3 einen schematisch dargestellten teilweisen Längsschnitt eines Teilbereiches des Werkzeugstiftes gemäß Ausschnitt III in Fig. 2.

In den Zeichnungen ist eine Werkzeugform zur Verarbeitung plastischer Massen insgesamt mit der Bezugsziffer 10 bezeichnet. Gleiche Bezugsziffern, auch unter Ergänzung von kleinen Buchstaben in den unterschiedlichen Figuren, bezeichnen entsprechende Teile.

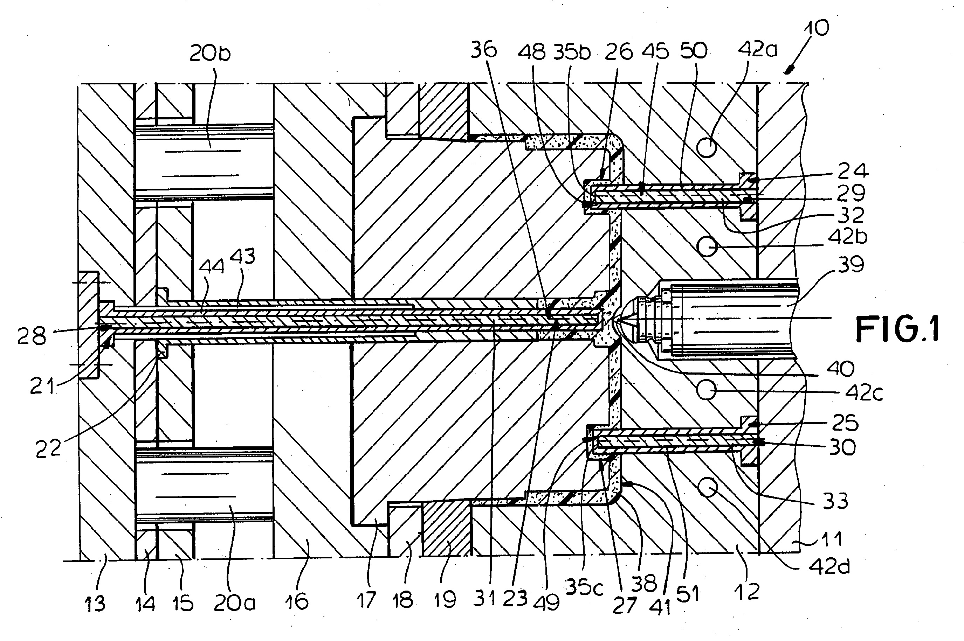

Die Werkzeugform 10 weist gemäß Fig. 1 düsenseitig eine Aufspannplatte 11 sowie eine Formplatte 12 auf. Auswerferseitig ist die Werkzeugform 10 mit einer Aufspannplatte 13, zwei Auswerterhalteplatten 14 und 15, einer Formplatte 16 sowie mit einem Formkern 17 versehen. Zudem weist die Werkzeugform 10 Abstreiferplatten 18 und 19 auf. Traversen 20a und 20b stützen die Formplatte 16 gegen Durchbiegung infolge des auftretenden Werkzeuginnendrucks. Ein Werkzeugstift 21 ist an der Aufspannplatte 13 befestigt und durchgreift die Auswerferhalteplatten 14 und 15, die Formhalteplatte 16 sowie die Formplatte 17, so dass ein Endbereich 36 des Werkzeugstiftes 21 in einer Formhöhlung 41 angeordnet ist.

Der Werkzeugstift 21 dient der Formgebung eines Sackloches 23 in einem Formteil (Kunststoffspritzgießteil) 38. Auf dem Werkzeugstift 21 ist eine Hülse 22 geführt. Sie dient dem Ausstoßen des Formteils 38. Dazu bewegen sich die Auswerferhalteplatten 14 und 15 während des Öffnens der Werkzeugform 10 in Richtung der Formhalteplatte 16, wobei auch die Hülse 22 mitgenommen wird. Die Hülse 22 bewegt sich somit relativ zu dem Werkzeugstift 21. Zwischen Werkzeugstift 21 und Hülse 22 ist daher ein Spalt 43 vorgesehen, der dem Freilauf des Werkzeugstifts 21 dient.

Düsenseitig sind in der Formplatte 12 Werkzeugstifte 24, 25 befestigt, welche der Formgebung der Dome 26 und 27 des Formteils 38 dienen und welche als Formgebungsstifte oder Kernstifte bezeichnet werden können. Deshalb ragen Endbereiche 45 und 46 der Werkzeugstifte 24 und 25 in die Formhöhlung 41.

Der Werkzeugstift 21 weist einen Stiftmantel 44 aus Stahl auf, der über seine gesamte axiale Länge hinweg mit einer Axialbohrung 28 versehen ist. In der Axialbohrung 28 ist ein Stiftkern 31 aus Kupfer aufgenommen. Auf die gleiche Weise weisen die Werkzeugstifte 24 und 25 Stiftmäntel 50 bzw. 51 mit Axialbohrungen 29 bzw. 30 auf, in denen Stiftkerne 32 bzw. 33 aus Kupfer angeordnet sind.

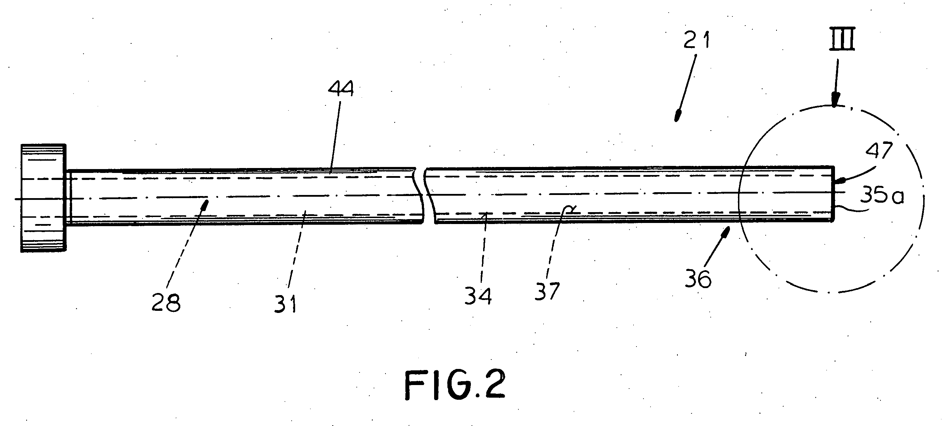

In Fig. 2 ist der Werkzeugstift 21 als Einzelteil dargestellt. Der Aufbau des Werkszeugstiftes 21 unterscheidet sich grundsätzlich nicht von dem Aufbau der Werkzeugstifte 24 und 25, die ebenfalls formgebende Funktion haben. Gemäß Fig. 2 ist die Außenmantelfläche 34 des Stiftkerns 31 mit einer Innenmantelfläche 37 des Stiftmantels 44 stoffschlüssig verbunden, wobei zwischen Außenmantelfläche 34 des Stiftkerns 31 und Innenmantelfläche 37 des Stiftmantels 44 eine metallische Verbindung besteht. Zur Herstellung dieser Verbindung wird ein Verfahren der MECOBOND Dr. Betz GmbH, 45478 Mülheim (DE), verwendet. Bei diesem Verfahren wird der Stiftkern 31 aus Kupfer über seine Streckgrenze hinaus druckbeaufschlagt, so dass dieser zumindest im Mikrobereich plastisch verformt wird und mit dem aus Stahl bestehenden Stiftmantel 44 des Werkzeugstift 21 eine lückenlose Verbindung eingeht. Der Stiftkern 31 aus Kupfer verleiht dem Werkzeugstift 21 sehr gute Wärmeleitfähigkeit. Durch den Stiftmantel aus Stahl ist darüber hinaus eine gute Abriebfestigkeit gewährleistet. Das MECOBOND-Verfahren ist in der DE 102 29 994 C1 beschrieben.

Gemäß Fig. 1 befindet sich die Werkzeugform 10 kurz vor dem Auswerfen des Formteiles 38, wobei eine Kunststoffschmelze zuvor mittels einer beheizten Düse 39 über eine Anschnittöffnung 40 in die Formhöhlung 41 eingespritzt wurde. Die Wärmeenergie der Kunststoffschmelze, insbesondere aus dem Bereich der Dome 26 und 27, wird mittels der erfindungsgemäßen Werkzeugstifte 24 und 25 sehr schnell an wassergekühlte Kühlkanäle 42a, 42b, 42c und 42d abgeleitet, welche den Werkzeugstiften 24 und 25 unmittelbar benachbart angeordnet sind. Die Wärmeenergie, insbesondere aus dem Bereich des Sacklochs 23 des Formteils 38, wird von dem erfindungsgemäßen Werkzeugstift 21 aus der Formhöhlung 41 in Richtung Aufspannplatte 13 abgeleitet und an die Außenluft abgegeben.

Um zu verhindern, dass korrosive Kunststoffschmelzen die Stiftkerne 31, 32 und 33 angreifen, sind die spritzgussteilseitigen Öffnungen 47, 48, 49 der Axialbohrungen 28, 29 und 30 jeweils durch eine Laserauftragsschweißschicht 35a, 35b, 35c beschichtet. Anstelle der jeweiligen Laserauftragschweißschicht kann man sich auch eine dieselbe vorteilhafte Schutzwirkung erbringende aufgelötete oder z.B. mittels Laser aufgeschweißte Stahlplatte vorstellen. Die Stiftmäntel 44, 50 und 51 bestehen aus Stahl, der eine gute Thermoschockbeständigkeit und Abriebsfestigkeit aufweist.

Um trotz der vorhandenen Stiftkerne 31, 32 und 33 eine hinreichende Festigkeit der Werkzeugstifte 21, 24 und 25 zu gewährleisten, weisen Letztere einen Mindestdurchmesser von 10 mm auf.

Obwohl die Erfindung im Ausführungsbeispiel nur bei formgebenden Kernstiften 21, 24 und 25 Anwendung findet, kann sie auch bei Auswerferstiften oder Werkzeugstiften, die sowohl Auswerfer- als auch formgebende Funktion haben, eingesetzt werden.

## Patentansprüche

1. Werkzeugstift (21, 24, 25), wie formgebender Werkzeugstift, Kernstift, Auswerferstift od. dgl., in einer Werkzeugform zur Verarbeitung plastischer Massen, insbesondere Kunststoffspritzgießform, mit mindestens einem eine Formhöhlung (41) begrenzenden formbildenden Werkzeugteil (12, 17), wie Formplatte oder Formeinsatz, welches mindestens eine Führungsaussparung zur Aufnahme des stabförmigen Werkzeugstifts (21, 24, 25), aufweist, welcher mindestens teilweise aus hochwärmeleitfähigen Werkstoff, wie CuBe od. dgl., gefertigt ist, **dadurch gekennzeichnet, dass** der Werkzeugstift (21, 24, 25) einen Mantelbereich (44, 50, 51) aus Stahl aufweist, der zumindest über einen axialen Teilbereich mit einer Axialbohrung (28, 29, 30) versehen ist, in welcher ein Stiftkern (31, 32, 33) aus hochwärmeleitfähigem Werkstoff angeordnet ist, wobei die Werkstoffe von Mantelbereich (44, 50, 51) und Stiftkern (31, 32, 33) unter Bildung einer dauerfesten und lückenlosen Verbindung zwischen der Außenmantelfläche (34) des Stiftkerns (31, 32, 33) und der Innenmantelfläche (37) des Stiftmantels (44, 50, 51) ineinander greifen.

2. Werkzeugstift nach Anspruch 1, **dadurch gekennzeichnet, dass** der Stiftkern (31, 32, 33) aus Kupfer oder aus einer Kupferlegierung gebildet ist.

3. Werkzeugstift nach Anspruch 1 oder nach Anspruch 2, **dadurch gekennzeichnet, dass** die Außenmantelfläche (34) des Stiftkerns (31, 32, 33) mit der Innenmantelfläche (37) des Stiftmantels (44, 50, 51) unter Bildung einer metallischen Verbindung stoffschlüssig miteinander verbunden ist.

4. Werkzeugstift nach einem der vorangehenden Ansprüche, **dadurch gekennzeichnet, dass** die Axialbohrung (28, 29, 30) wenigstens an dem der Formhöhlung (41) benachbarten Endbereich (36, 45, 46) mittels einer Stahlplatte verschlossen ist.

5. Werkzeugstift nach einem der Ansprüche 1 bis 3, **dadurch gekennzeichnet, dass** die Axialbohrung (28, 29, 30) wenigstens an dem der Formhöhlung (41) benachbarten Endbereich (36, 45, 46) mittels einer Beschichtung (35a, 35b, 35c) verschlossen ist.

6. Werkzeugstift nach einem der vorangehenden Ansprüche, **dadurch gekennzeichnet, dass** benachbart dem Werkzeugstift (21, 24, 25) Kühlkanäle (42a, 42b, 42c, 42d) angeordnet sind.

7. Werkzeugstift nach einem der vorangehenden Ansprüche, **dadurch gekennzeichnet, dass** die Axialbohrung (28, 29, 30) sich über den gesamten Axialbereich des Werkzeugstifts (21, 24, 25) erstreckt.

8. Werkzeugstift nach einem der vorangehenden Ansprüche, **dadurch gekennzeichnet, dass** der Stiftkern (31, 32, 33) sich über den gesamten Axialbereich des Werkzeugstifts (21, 24, 25) erstreckt.

9. Werkzeugstift nach einem der Ansprüche 1 bis 7, **dadurch gekennzeichnet, dass** der Stiftkern (31, 32, 33) sich über einen axialen Teilbereich des Werkzeugstifts (21, 24, 25) erstreckt.

10. Werkzeugstift nach einem der vorangehenden Ansprüche, **dadurch gekennzeichnet, dass** der Werkzeugstift (21, 24, 25) einen Mindestdurchmesser von 10 mm aufweist.
